# EUROPEAN PATENT SPECIFICATION

(11) **EP 3 688 843 B1**
(45) Date of publication and mention of the grant of the patent: **19.11.2025**
(21) Application number: 18779358.3
(22) Date of filing: 26.09.2018
(51) Int. Cl.: H01R 9/05, H01R 4/18, H01R 4/20, H01R 103/00

(54) **SUPPORT BARREL FOR AN ELECTRICAL LEAD**
STÜTZZYLINDER FÜR EINE ELEKTRISCHE LEITUNG
CYLINDRE DE SUPPORT DESTINÉ À UN CONDUCTEUR ÉLECTRIQUE

(30) Priority: 29.09.2017 DE 102017217476
(43) Date of publication of application: 05.08.2020
(73) Proprietor: TE Connectivity Germany GmbH, 64625 Bensheim (DE)
(72) Inventor: SCHRETTLINGER, Christian, 64625 Bensheim (DE); DE CLOET, Olivier, 64653 Lorsch (DE); ABOULKASSEM, Samir, 64291 Darmstadt (DE); BLUEMMEL, Uwe, 69502 Hemsbach (DE); STARKE, Marcel, 64521 Gross-Gerau (DE)
(74) Representative: Grünecker Patent- und Rechtsanwälte PartG mbB
(86) International application number: PCT/EP2018/076174
(87) International publication number: WO 2019/063641

(56) References cited:
- JP-A- 2006 302 824
- US-A- 6 107 572
- US-A1- 2017 201 034

## Description

The invention relates to a support barrel for an electrical lead, in particular for a coaxial cable, wherein two barrel ends that are opposite each other in a circumferential direction of the support barrel engage in each other and form a positive-engagement acting in the circumferential direction, wherein the barrel ends are provided with positive engagement elements configured to complement each other, and wherein at least one of the barrel ends is provided with a closure head that is elastically deformable in an axial direction of the support barrel, and the opposite barrel end is provided with at least one closure head receiver configured to complement the at least one closure head, and wherein the at least one closure head is provided with at least one gap extending substantially in the circumferential direction.

Support barrels may be used to impart mechanical stability to an electrical lead, in particular in such regions of the lead that are to be provided with a contacting element. In the case of a coaxial cable, in particular, the use of a support barrel may be advantageous. In this case, a support barrel is normally applied to the exposed outer shield. The shield, which for example may consist of a braid of strands, can then be drawn over the barrel, or folded or put over the latter. The lead can then be provided with a contacting element that is to be electrically connected to the shield. Such a contacting element may itself be in the form of a barrel, at least in some portions, and at least partially surround the support barrel and the shield bearing against the outside of the support barrel. If this contacting element is then, for example, crimped, pressed or otherwise fixedly connected to the lead, the support barrel imparts mechanical stability to the lead. As a result, the inner insulation and the inner conductor of the coaxial cable is protected against deformation. Moreover, the support barrel may define a region at which the shield is folded back, or everted. The support barrel may then fix in place the shield, or the strand, arranged inside the support barrel.

A shielded connector comprising a terminal that can be crimped onto a shielded cable is known from US 2017/201034 A1. The terminal has a shield crimping portion that can be crimped onto the shielding of the cable, wherein the ends of the shield crimping portions are provided with an engagement projection and an engagement recess. The engagement recess and the engagement projection are formed complementary to each other.

From JP 2006 302824 A, a shield connector is known that comprises a separate barrel which can be crimped around the shield of a cable. The ends of the barrel are shaped to extend into each other.

In the case of the known support barrels, it is disadvantageous that either they can only be applied to the lead with difficulty or they do not sufficiently completely surround the lead, such that parts of the shield, or individual strands, upon being folded over or everted, emerge from the lead at the regions not covered by the support barrel, and consequently do not follow the desired course actually defined by the support barrel.

It is thus the object of the invention to provide a support barrel, of the above-mentioned type, that both allows sufficient enclosure of an electrical lead, in particular of the shield of a coaxial cable, and that, at the same time, can be installed rapidly and easily on a lead, insofar as possible in an automated manner.

The object according to the invention is achieved by a support barrel with the features of claim 1.

Owing to the mutually engaging barrel ends, the support barrel can be closed all the way round, such that complete enclosure of an electrical lead in the circumferential direction is ensured. In addition, since only the ends engage in each other, it is possible to dispense with complicated production steps such as, for example, wrapping the lead, or the like. The positive engagement acting in the circumferential direction can prevent the support barrel from being bent apart. Owing to the mutual positive engagement, the barrel ends are locked to each other, or the barrel is closed at the barrel ends.

The support barrel preferably has an elongate shape that corresponds substantially to that of a hollow cylinder. The cylinder axis of the hollow cylinder in this case corresponds to an axial direction of the support barrel. The circumferential direction of the support barrel is accordingly arranged transversely thereto, and runs around the cylinder axis. The support barrel preferably has a substantially circular cross section. However, cross-sectional shapes other than the circular shape, for example an oval or elliptical shape, are also possible.

In addition to the aforementioned support barrel, the invention also relates to an electrical connection element, comprising a support barrel and a contacting element that surrounds the support barrel. The electrical connection element according to the invention is characterized in that it is provided with at least one support barrel according to the invention. The connection element can thereby profit from the previously described advantages of the support barrel according to the invention.

As a result of the closure head and the closure head receiver, easily constructed positive-engagement elements can be obtained.

The at least one closure head is elastically deformable, in particular compressible, along the axial direction of the support barrel in order both to facilitate insertion of the at least one closure head a particular application. Likewise, in accordance with the above statements, individual features in the case of the described embodiments may be omitted if the effect of this feature is not important into the at least one closure-head receiver and, in addition, to ensure secure seating of the closure head in the closure-head receiver.

The at least one gap in the closure head allows to obtain an elastically deformable closure head in the simplest possible manner. The gap preferably extends centrally into the closure head.

The solution according to the invention may be further improved by various configurations that are each advantageous per se and that can be combined with each other in any manner. These configurations, and the advantages associated with them, are discussed hereinafter.

The barrel ends are provided with positive-engagement elements configured to complement each other. As a result of the positive-engagement elements, effective mutual engagement of the barrel ends can be achieved.

In order to achieve an arrangement that is as compact as possible, the positive-engagement elements configured to complement each other are preferably arranged inside a hollow-cylinder wall spanned by the support barrel. There are thus preferably no elements that project out of the hollow cylinder spanned by the support barrel or that protrude outwardly. This is advantageous, in particular, for protecting a shield, folded over the support barrel, against damage.

The outer circumference of the support barrel may be continued in the circumferential direction, at least by the positive-engagement elements configured to complement each other. In other words, the support barrel is closed as viewed in the axial direction and, likewise as viewed in the axial direction, has the shape of a ring. The support barrel thus preferably does not have any gap extending parallel to the axial direction through the barrel. Thus, in an effective manner, strands arranged inside the support barrel can be prevented from separating out.

The at least one closure head of the one barrel end may project into a recess of the closure-head receiver of the other barrel end, which recess is undercut with respect to the circumferential direction. Owing to the undercut recess, a positive engagement can be formed in an effective manner, in the circumferential direction, between the closure head and the closure-head receiver. The undercut recess preferably extends from the barrel end into the support barrel, initially along the circumferential direction, and then on at least one side transversely in relation to the circumferential direction of the barrel, i.e. along the axial direction. The undercut recess preferably extends along the axial direction on both sides, and has an overall symmetrical shape with respect to a mirror plane extending transversely in relation to the axial direction of the support barrel.

In order to prevent strands from being drawn in between the two barrel ends, the two barrel ends preferably bear against each other at at least one axial end of the support barrel. In other words, there is preferably no space between the barrel ends. If the barrel ends do not bear directly against each other, a space between them is preferably less than a diameter of the strand to be used, in order to prevent drawing into the space.

In order to close in an effective manner at least one axial end of the support barrel and to prevent in an effective manner strands from being drawn in between the barrel ends, at least one axial locking member extends from one of the barrel ends in the direction of the opposite barrel end. The axial locking member may, for example, bear directly against the opposite barrel end. Likewise preferably, in the axial direction the axial locking member is flush with the rest of the support barrel. This means that the axial locking member can seamlessly continue the edge of the barrel lying in the axial direction.

In order to obtain a particularly effective axial locking member that closes the support barrel in an effective manner even if the support barrel deforms, the at least one axial locking member may overlap, at least in sections, with the opposite barrel end. For example, the at least one axial locking member may be arranged, in the radial direction of the support barrel, on or under the material of the opposite barrel end. Preferably, the at least one axial locking member extends, in the radial direction, underneath the opposite barrel end. For this purpose, the at least one axial locking member may be flattened, at least in some portions, relative to the rest of the material of the support barrel. In particular, the at least one axial locking member may flatten towards a tip, a material thickness measured in the radial direction decreasing towards the tip of the locking member. The opposite barrel end preferably has a recess for receiving the axial locking member.

The mutually opposite barrel ends are preferably connected to each other by crimping. Preferably, the support barrel is closed around the electrical lead by a single crimping process and, at the same time, the mutually opposite barrel ends are brought into a positive engagement, such that the support barrel is closed in an effective manner in the circumferential direction.

The support barrel is preferably manufactured as a stamped bent part. The production of a support barrel according to the invention can thereby be simplified.

The support barrel according to the invention is preferably formed of steel, in particular of high-grade steel. A high mechanical stability can thereby be achieved. Yielding of the material, as is known, for example, in the case of some materials containing copper, can also be prevented. As an alternative to this, however, the support barrel may also be formed from a material containing copper. In this case, it is advantageous if the material containing copper, or the Cu material, is of a composition that ensures adequate stability.

The invention is explained by way of example in greater detail hereinafter using various exemplary embodiments, with reference to the drawings. The feature combinations exemplified in the embodiments may be complemented by further features, in accordance with the above statements, according to the properties of the support barrel according to the invention that are necessary for in a specific application. In the drawings, the same reference numbers are used in each case for elements that have the same function and/or the same structure.

There are shown:
- Fig. 1-4: a first preferred embodiment of the support barrel according to the invention in the open state, in various views;
- Fig. 5-6: the support barrel from Fig. 1 in the closed state, in a top view, transversely in relation to the axial direction, and in a view along the support barrel axis;
- Fig. 7: a second example, not forming part of the invention, of a support barrel which differs from the first embodiment in that it does not comprise an axial locking member; and
- Fig. 8: an electrical connection element having a support barrel according to the invention, in a cross section along the axial direction of the support barrel.

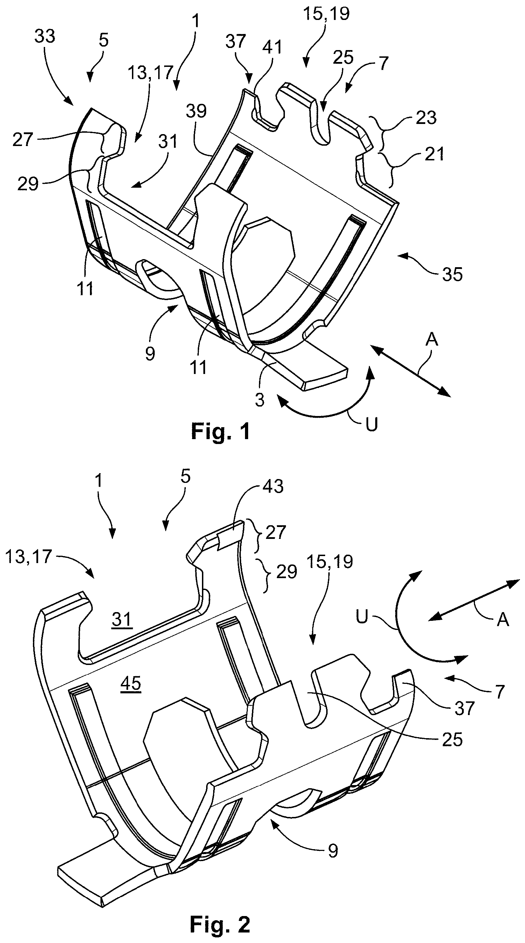

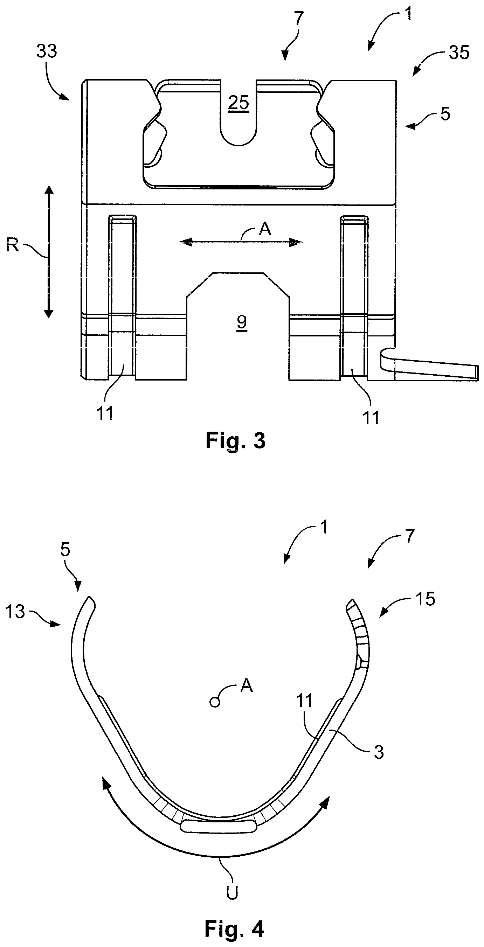

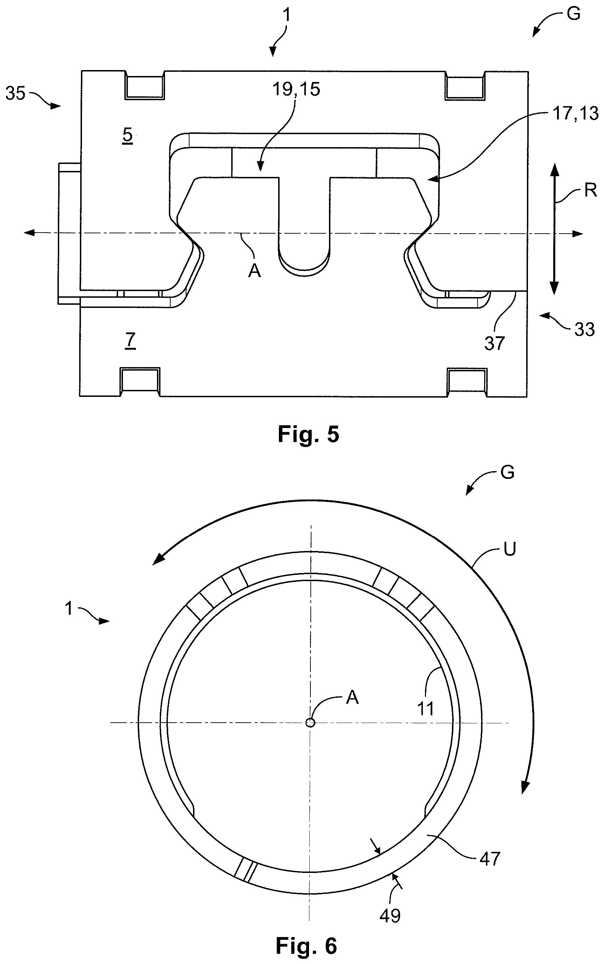

In the following, the structure of a first embodiment of the support barrel according to the invention, in the open state, is described first with reference to Figures 1 to 4. A description of the support barrel in the closed state is then given with reference to Figures 5 and 6. For reasons of simplicity, the stated directions that relate to the closed support barrel are also used for the description of the support barrel in the open state, and are accordingly indicated in Figures 1 to 4.

The support barrel 1 is preferably manufactured as a stamped bent part. Steel, in particular high-grade steel 3, is preferably used as a material. However, the support barrel 1 may also be formed from a Cu material, i.e. from a material containing copper. The support barrel 1 is preferably formed such that it is laid around an electrical lead, and closed at the same time, by a single process step, in particular by crimping. This is possible, in particular, because of the shape of the support barrel 1 described hereinafter.

The support barrel 1 extends substantially along an axial direction A, along which an electrical lead (not represented) is also arranged when the support barrel 1 is in use.

The support barrel 1 further extends, transversely in relation to the axial direction A, along a circumferential direction U, from one barrel end 5 to an opposite barrel end 7. The barrel ends 5 and 7 are opposite each other in the circumferential direction U. The support barrel 1 extends continuously, at least in some portions, from the one barrel end 5 to the other barrel end 7.

However, the support barrel 1 may also be provided with at least one opening 9, in order to save material and to determine the deformability of the support barrel 1. The support barrel 1 may additionally be provided with stiffening beads 11 that extend, parallel to the circumferential direction U, through the support barrel 1. The stiffening beards 11 can increase the stability of the support barrel 1. The opening 9 is preferably arranged, in the axial direction A, between two stiffening beads 11.

The barrel ends 5 and 7 are provided with positive-engagement elements 13 and 15 that are configured to complement each other. In this case, the positive-engagement element 13 is formed as a closure-head receiver 17 on the barrel end 5, and the positive-engagement element 15 is formed, on the opposite barrel end 7, as a closure head 19 formed to be complementary to the closure-head receiver 17. The closure-head receiver 17 and the closure head 19 are shaped such that the closure head 19 can be received in the closure-head receiver 17 and is then held in positive engagement in the circumferential direction U. This is described at a later point with reference to Figures 5 and 6.

The closure head 19 has a neck portion 21 and a head portion 23. Along the axial direction A the head portion 23 is wider than the neck portion 21, and is spaced further apart than the neck portion 21 from the rest of the support barrel 1. At least the head portion 23 is provided with a gap 25 that extends into the material of the support barrel 1, along the circumferential direction U. The gap 25 may also extend into the neck portion 21, or beyond it into the support barrel 1. The gap 25 opens the closure head 19 outwardly. Owing to the gap 25, the closure head 19 is elastically compressible in the axial direction A, at least in the head portion 23. As a result, insertion into the closure-head receiver 17 can be facilitated. Moreover, the gap 25, and the therewith associated elastic deformability of the closure head 19, can impart elasticity to the support barrel 1 in the closed state.

As already described above, the closure-head receiver 17 is shaped to be complementary to the closure head 19. Accordingly, the closure-head receiver 17 has an entrance portion 27 that opens the barrel end 5 outwardly in the circumferential direction U and that is formed to be complementary to the neck portion 21 of the closure head 19. Adjoining the entrance portion 27, along the circumferential direction U, is the receiving portion 29. Along the axial direction A the receiving portion 29 is wider than the entrance portion 27. The receiving portion 29 serves to receive the head portion 23 of the closure head 19.

Owing to the fact that the receiving portion 29 is wider than the entrance portion 27 along the axial direction A, it constitutes an undercut recess 31. The recess 31 is undercut along the axial direction A.

The recess 31 is formed to be mirror-symmetrical with respect to the axial direction A. The same applies correspondingly to the closure head 19. In other words, the undercut recess 31 extends into the material of the support barrel 1, in the direction of the two mutually opposite axial ends 33 and 35 of the support barrel 1. Correspondingly, in the head portion 23, the closure head 19 protrudes over the neck portion 21, in the direction of the two axial ends 33 and 35.

The support barrel 1 has at least one axial locking member 37. The axial locking member 37 extends from the barrel end 7 in the direction of the barrel end 5. Alternatively, the axial locking member 37 may also be arranged at the barrel end 5, and extend in the direction of the barrel end 7. The axial locking member 37 is preferably arranged at one of the axial ends 33 or 35 of the support barrel 1. In the depicted embodiment, the axial locking member 37 is arranged, by way of example, at the axial end 33.

The locking member 37 is preferably flush with the support barrel 1 at the axial end 33. In other words, at the barrel end 33, the edge 39 of the support barrel 1 that runs along the circumferential direction U extends over the locking member 37. The edge 39 thus continues on the locking member 37. The locking member 37 is arranged next to the closure head 19 along the axial direction A, and in the circumferential direction U extends approximately as far as the head portion 23.

As viewed in a cross section along the axial direction A, the locking member 37 tapers to its end 41 that faces away from the rest of the support barrel 1. In other words, the axial locking member 37 becomes flatter towards its end 41. Arranged on the opposite barrel end 5 is a recess 43 that serves to receive the axial locking member 37 when the support barrel 1 is in the closed state. The recess 43 extends on an inner side 45 of the support barrel 1 into the material thereof. The recess 43 is preferably formed to be complementary to the locking member 37.

The support barrel described with reference to Figures 1 to 4 is described hereinafter in a closed state, with reference to Figures 5 and 6.

In the closed state G, the closure head 19 is arranged in the closure-head receiver 17. As a result, the barrel ends 5 and 7 engage in each other and form a positive engagement along the circumferential direction U. Owing to the fact that the closure head 19 projects into the closure-head receiver 17, the outer circumference of the support barrel 1 is continued along the circumferential direction U. In other words, the support barrel 1 does not have any gap that extends, along the axial direction A, through the entire support barrel 1.

In the closed state G, the support barrel has a preferably circular cross section as viewed along the axial direction A. Alternatively, different cross-sectional shapes are possible. For example, the support barrel 1 may also have an elliptical or oval cross section. The positive-engagement elements 13 and 15, or the closure-head receiver 17 and the closure head 19, do not project out of the support barrel 1 or into it in a radial direction R. In other words, the positive-engagement elements 13 and 15 are located inside a hollow-cylinder wall 47 spanned by the rest of the support barrel 1. This is depicted in Fig. 6.

Substantially, a thickness 49 of the hollow-cylinder wall 47 is determined by the material thickness of the material of the support barrel 1. The thickness 49 in cross section is optionally increased by stiffening beads 11, if applicable. Owing to the fact that preferably no element of the support barrel 1 projects out of the hollow-cylinder wall 47, damage to an electrical lead, an insulation or other elements can be prevented.

In the closed state G, the axial locking member 37 projects into the recess 43. The support barrel 1 is thereby closed all the way round, along the circumferential direction U, at the axial end 33. Consequently, strands are, in an effective manner, prevented from being drawn in at the end 33. Owing to the fact that the locking member 37 is arranged in the recess 43 of the barrel end 5, the locking member 37 overlaps with this barrel end 5. Should the support barrel 1, in the closed state G, undergo deformation as a result of external action, the closure of the axial end 33 can continue to be ensured by way of the overlap of the locking member 37 with the opposite end 5. Even if the barrel ends 5 and 7 are drawn slightly apart, the axial end 33 remains closed, provided that the barrel ends 5 and 7 are not drawn further apart than the overlap of the locking member 37 with the end 5.

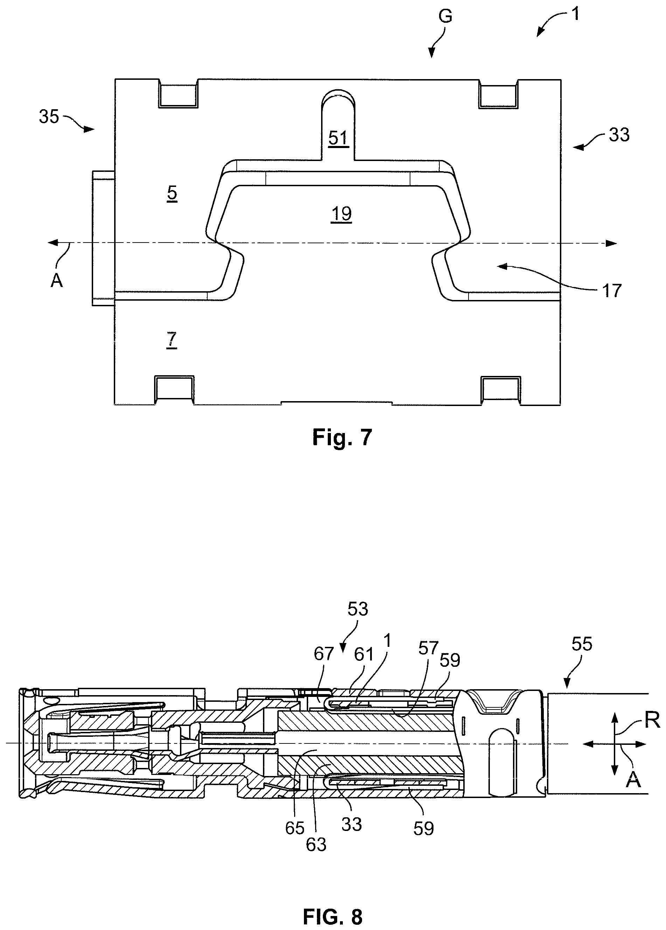

A second example, not forming part of the invention, of a support barrel which differs from the first embodiment in that it does not comprise an axial locking member is described hereinafter with reference to Fig. 7. In this case, for reasons of brevity, only the differences in comparison with the embodiment described with reference to Figures 1 to 6 are discussed. The support barrel 1 in Fig. 7, like the support barrel 1 of the previously described embodiment in Fig. 5, is depicted in the closed state G.

The second example differs from the first embodiment substantially in that there is no axial locking member 37. It is advantageous in this case if the dimensions of the closure-head receiver 17 and of the closure head 19 are matched to each other such that, in the closed state G, there is no gap between the two barrel ends 5 and 7. Small manufacturing tolerances may be permitted in this case, provided that any gap that exists between the barrel ends 5 and 7 is less than a diameter of the strands to be used. Preferably, however, the barrel ends 5 and 7 abut against each other in the region of the axial ends 33 and 35.

A further difference of the second example in comparison with the first embodiment of the support barrel 1 is that it is not the closure head 19, but the opposite barrel end 5, that is provided with a gap. In this case, a gap 51 extends from the closure-head receiver 17, along the circumferential direction U, into the support barrel 1. As a result, the closure head 19 is not elastically compressible, but the opposite barrel end 5 is elastically expandable.

An electrical connection element 53, which is provided with a support barrel 1 according to the invention, is described hereinafter with reference to Fig. 8.

The electrical connection element 53 may be, in particular, a plug-in contact. The support barrel 1 according to the invention may be formed according to the previously described embodiment. The support barrel 1 is in the closed state, and bears against an electrical lead 55.

In this case, the support barrel 1 is arranged surrounding a shield 57 of the electrical lead 55. The shield 57 may be formed, in particular, from a braid of strands. The electrical lead 55 is preferably a coaxial cable.

To effect electrical contacting of the shield 57 of the electrical lead 55, the shield is folded around the support barrel, or put over it, such that an end portion 59 of the shield 57 bears against the outside of the support barrel 1, as viewed in the radial direction R. The end portion 59 is surrounded from the outside by a contacting element 61, and electrically contacted by it. The contacting element 61 is part of the connection element 53, and is preferably connected to a part of the connection element 53 provided for contacting to a counterpart. In particular, the contacting element 61 may be crimped. In other words, the contacting element 61 is pressed onto the end portion 59 of the shield 57.

The support barrel 1 ensures the mechanical stability of the electrical lead 55. In particular, the support barrel 1 prevents parts of the lead 55 that are arranged inside the support barrel 1, for example an insulation layer 63 or an inner conductor 63, from being damaged when the contacting element 61 is compressed or when the connection element 53 is used.

Owing to the barrel ends 5 and 7 (not depicted in Fig. 8) that engage in each other with positive engagement, the support barrel 1 according to the invention is effective in preventing parts of the shield 57, in particular strands, from being drawn into the support barrel 1 upon being folded over or everted. Consequently, the support barrel 1 in this case is aligned such that, when it is provided with an axial locking member at the axial end 33, this axial end 33 faces towards the reversal region 67 of the shield 57.

### Reference numbers

- 1: support barrel
- 3: high-grade steel
- 5, 7: barrel end
- 9: opening
- 11: stiffening bead
- 13: positive-engagement element
- 15: positive-engagement element
- 17: closure-head receiver
- 19: closure head
- 21: neck portion
- 23: head portion
- 25: gap
- 27: entrance portion
- 29: receiving portion
- 31: recess
- 33: axial end
- 35: axial end
- 37: axial locking member
- 39: edge
- 41: end of the axial locking member
- 43: recess
- 45: inner side
- 47: hollow-cylinder wall
- 49: thickness
- 51: gap
- 53: electrical connection element
- 55: electrical lead
- 57: shield
- 59: end portion
- 61: contacting element
- 63: insulation
- 65: inner conductor
- 67: reversal portion

- A: axial direction
- G: closed state
- R: radial direction
- U: circumferential direction

## Claims

1. A support barrel (1) for an electrical lead (55), in particular for a coaxial cable, wherein two barrel ends (5, 7) that are opposite each other in a circumferential direction (U) of the support barrel (1) engage in each other and form a positive engagement acting in the circumferential direction (U), wherein the barrel ends (5, 7) are provided with positive-engagement elements (13, 15) configured to complement each other, wherein at least one of the barrel ends (5, 7) is provided with a closure head (19), and the opposite barrel end (5, 7) is provided with at least one closure-head receiver (17) configured to complement the at least one closure head (19), and wherein the at least one closure head (19) is elastically deformable in an axial direction (A) of the support barrel (1), and wherein the at least one closure head (19) is provided with at least one gap (25) extending substantially in the circumferential direction (U), **characterized in that** at least one axial locking member (37) extends from one of the barrel ends (5, 7) in the direction of the opposite barrel end (5, 7) and **in that** the axial locking member (37) is arranged at the barrel end (5, 7) that is provided with the closure head (19).

2. The support barrel (1) according to Claim 1, **characterized in that** the at least one closure head (17) is compressible along the axial direction (A) of the support barrel (1).

3. The support barrel (1) according to Claim 1 or 2, **characterized in that** the positive-engagement elements (13, 15) configured to complement each other are arranged inside a hollow-cylinder wall (47) spanned by the support barrel (1).

4. The support barrel (1) according to any of Claims 1 to 3, **characterized in that** the at least one closure head (19) of the one barrel end (5, 7) projects into a recess (31) of the closure-head receiver (17) of the other barrel end (5, 7), which recess is undercut with respect to the circumferential direction (U).

5. The support barrel (1) according to Claim 4, **characterized in that** the undercut recess (31) extends from the barrel end (5, 7) into the support barrel (1), initially along the circumferential direction (U), and then on at least one side transversely in relation to the circumferential direction (U) of the barrel (1), i.e. along the axial direction (A).

6. The support barrel (1) according to any of Claims 1 to 5, **characterized in that** the gap (25) preferably extends centrally into the closure head (19).

7. The support barrel (1) according to any one of Claims 1 to 6, **characterized in that** the at least one axial locking member (37) overlaps, at least in some portions, with the opposite barrel end (5, 7).

8. The support barrel (1) according to any one of Claims 1 to 7, **characterized in that** the at least one axial locking member (37) is flush with an axial barrel end (33, 35).

9. The support barrel (1) according to any one of Claims 1 to 8, **characterized in that** the mutually opposite barrel ends (5, 7) are connected to each other by crimping.

10. The support barrel (1) according to any one of Claims 1 to 9, **characterized in that** the support barrel (1) is composed of a Cu material or of steel, in particular high-grade steel (3).

11. An electrical connection element (53), comprising a support barrel (1) and a contacting element (61) that surrounds the support barrel (1), **characterized in that** the support barrel (1) is formed according to any one of Claims 1 to 10.

## Patentansprüche

1. Stützzylinder (1) für eine elektrische Leitung (55), insbesondere für ein Koaxialkabel, wobei zwei in Umfangsrichtung (U) des Stützzylinders (1) einander gegenüberliegende Zylinderenden (5, 7) ineinander greifen und einen in Umfangsrichtung (U) wirkenden Formschluss bilden, wobei die Zylinderenden (5, 7) mit formschlüssigen Elementen (13, 15) versehen sind, welche komplementär zueinander ausgebildet sind, wobei mindestens eines der Zylinderenden (5, 7) mit einem Verschlusskopf (19) versehen ist und das gegenüberliegende Zylinderende (5, 7) mit mindestens einem Verschlusskopfaufnehmer (17) versehen ist, welcher komplementär zu dem mindestens einen Verschlusskopf (19) ausgebildet ist, und wobei der mindestens eine Verschlusskopf (19) in einer axialen Richtung (A) des Stützzylinders (1) elastisch verformbar ist und wobei der mindestens eine Verschlusskopf (19) mit mindestens einem Spalt (25) versehen ist, welcher sich im Wesentlichen in Umfangsrichtung (U) erstreckt, **dadurch gekennzeichnet, dass** sich mindestens ein axiales Verriegelungselement (37) von einem der Zylinderenden (5, 7) in Richtung des gegenüberliegenden Zylinderendes (5, 7) erstreckt und dass das axiale Verriegelungselement (37) an dem Zylinderende (5, 7) angeordnet ist, welches mit dem Verschlusskopf (19) versehen ist.

2. Stützzylinder (1) gemäß Anspruch 1, **dadurch gekennzeichnet, dass** der mindestens eine Verschlusskopf (17) entlang der axialen Richtung (A) des Stützzylinders (1) komprimierbar ist.

3. Stützzylinder (1) gemäß Anspruch 1 oder 2, **dadurch gekennzeichnet, dass** die komplementär zueinander ausgebildeten Formschlusselemente (13, 15) innerhalb einer vom Stützzylinder (1) überspannten Hohlzylinderwand (47) angeordnet sind.

4. Stützzylinder (1) gemäß einem der Ansprüche 1 bis 3, **dadurch gekennzeichnet, dass** der mindestens eine Verschlusskopf (19) des einen Zylinderendes (5, 7) in eine Ausnehmung (31) des Verschlusskopfaufnehmers (17) des anderen Zylinderendes (5, 7) hineinragt, wobei die Ausnehmung in Bezug auf die Umfangsrichtung (U) hinterschnitten ist.

5. Stützzylinder (1) gemäß Anspruch 4, **dadurch gekennzeichnet, dass** sich die hinterschnittene Ausnehmung (31) vom Zylinderende (5, 7) in den Stützzylinder (1) erstreckt, zunächst entlang der Umfangsrichtung (U) und dann auf mindestens einer Seite quer zur Umfangsrichtung (U) des Zylinders (1), d. h. entlang der axialen Richtung (A).

6. Stützzylinder (1) gemäß einem der Ansprüche 1 bis 5, **dadurch gekennzeichnet, dass** sich der Spalt (25) vorzugsweise mittig in den Verschlusskopf (19) erstreckt.

7. Stützzylinder (1) gemäß einem der Ansprüche 1 bis 6, **dadurch gekennzeichnet, dass** das mindestens eine axiale Verriegelungselement (37) zumindest in einigen Abschnitten das gegenüberliegende Zylinderende (5, 7) überlappt.

8. Stützzylinder (1) gemäß einem der Ansprüche 1 bis 7, **dadurch gekennzeichnet, dass** das mindestens eine axiale Verriegelungselement (37) bündig mit einem axialen Zylinderende (33, 35) abschließt.

9. Stützzylinder (1) gemäß einem der Ansprüche 1 bis 8, **dadurch gekennzeichnet, dass** die einander gegenüberliegenden Zylinderenden (5, 7) durch Crimpen miteinander verbunden sind.

10. Stützzylinder (1) gemäß einem der Ansprüche 1 bis 9, **dadurch gekennzeichnet, dass** der Stützzylinder (1) aus einem Cu-Material oder aus Stahl, insbesondere Edelstahl (3), besteht.

11. Elektrisches Verbindungselement (53), umfassend einen Stützzylinder (1) und ein Kontaktelement (61), das den Stützzylinder (1) umgibt, **dadurch gekennzeichnet, dass** der Stützzylinder (1) gemäß einem der Ansprüche 1 bis 10 ausgebildet ist.

## Revendications

1. Cylindre de support (1) destiné à un conducteur électrique (55), en particulier pour un câble coaxial, dans lequel deux extrémités de cylindre (5, 7) qui sont opposées l'une à l'autre dans une direction circonférentielle (U) du cylindre de support (1) s'engagent l'une dans l'autre et forment un engagement positif agissant dans la direction circonférentielle (U), dans lequel les extrémités de cylindre (5, 7) sont pourvues d'éléments d'engagement positif (13, 15) configurés de manière complémentaire, dans lequel au moins l'une des extrémités de cylindre (5, 7) est pourvue d'une tête de fermeture (19) et l'extrémité de cylindre opposée (5, 7) est pourvue d'au moins un logement de tête de fermeture (17) configuré de manière complémentaire à ladite au moins une tête de fermeture (19), et dans lequel ladite au moins une tête de fermeture (19) est élastiquement déformable dans une direction axiale (A) du cylindre de support (1), et dans lequel ladite au moins une tête de fermeture (19) est pourvue d'au moins un espace (25) s'étendant sensiblement dans la direction circonférentielle (U), **caractérisé en ce qu'**au moins un élément de verrouillage axial (37) s'étend depuis l'une des extrémités du cylindre (5, 7) dans la direction de l'extrémité opposée du cylindre (5, 7) et **en ce que** l'élément de verrouillage axial (37) est disposé à l'extrémité du cylindre (5, 7) qui est pourvue de la tête de fermeture (19).

2. Cylindre de support (1) selon la revendication 1, **caractérisé en ce que** ladite au moins une tête de fermeture (17) est compressible dans la direction axiale (A) du cylindre de support (1).

3. Cylindre de support (1) selon la revendication 1 ou 2, **caractérisé en ce que** les éléments d'engagement positif (13, 15) configurés pour se compléter mutuellement sont disposés à l'intérieur d'une paroi de cylindre creux (47) formée par le cylindre de support (1).

4. Cylindre de support (1) selon l'une quelconque des revendications 1 à 3, **caractérisé en ce que** ladite au moins une tête de fermeture (19) de l'une des extrémités (5, 7) du cylindre fait saillie dans un évidement (31) du récepteur de tête de fermeture (17) de l'autre extrémité (5, 7) du cylindre, lequel évidement est en contre-dépouille par rapport à la direction circonférentielle (U).

5. Cylindre de support (1) selon la revendication 4, **caractérisé en ce que** le renfoncement en contre-dépouille (31) s'étend depuis l'extrémité du cylindre (5, 7) dans le cylindre de support (1), initialement dans la direction circonférentielle (U), puis sur au moins un côté transversalement par rapport à la direction circonférentielle (U) du cylindre (1), c'est-à-dire dans la direction axiale (A).

6. Cylindre de support (1) selon l'une quelconque des revendications 1 à 5, **caractérisé en ce que** l'espace (25) s'étend de préférence de manière centrale dans la tête de fermeture (19).

7. Cylindre de support (1) selon l'une quelconque des revendications 1 à 6, **caractérisé en ce que** ledit au moins un élément de verrouillage axial (37) chevauche, au moins dans certaines parties, l'extrémité opposée du cylindre (5, 7).

8. Cylindre de support (1) selon l'une quelconque des revendications 1 à 7, **caractérisé en ce que** ledit au moins un élément de verrouillage axial (37) affleure une extrémité axiale du cylindre (33, 35).

9. Cylindre de support (1) selon l'une quelconque des revendications 1 à 8, **caractérisé en ce que** les extrémités opposées du cylindre (5, 7) sont reliées entre elles par sertissage.

10. Cylindre de support (1) selon l'une quelconque des revendications 1 à 9, **caractérisé en ce que** le cylindre de support (1) est composé d'un matériau Cu ou d'acier, en particulier d'acier de haute qualité (3).

11. Élément de connexion électrique (53), comprenant un cylindre de support (1) et un élément de contact (61) qui entoure le cylindre de support (1), **caractérisé en ce que** le cylindre de support (1) est formé selon l'une quelconque des revendications 1 à 10.
